# EUROPÄISCHE PATENTSCHRIFT

(11) **EP 2 670 622 B1**
(45) Veröffentlichungstag und Bekanntmachung des Hinweises auf die Patenterteilung: **20.05.2015**
(21) Anmeldenummer: 12701874.5
(22) Anmeldetag: 26.01.2012
(51) Int. Cl.: B60L 11/18, H01H 47/00

(54) **VERFAHREN ZUM SCHUTZ EINES LADEKABELS UND LADEEINRICHTUNG**
METHOD FOR PROTECTING A CHARGING CABLE, AND CHARGING DEVICE
PROCÉDÉ DE PROTECTION D'UN CÂBLE DE CHARGE ET DISPOSITIF DE CHARGE

(30) Priorität: 02.02.2011 DE 102011003518
(43) Veröffentlichungstag der Anmeldung: 11.12.2013
(73) Patentinhaber: Siemens Aktiengesellschaft, 80333 München (DE)
(72) Erfinder: NOLEWAIKA, Martin, 91056 Erlangen (DE)
(86) Internationale Anmeldenummer: PCT/EP2012/051186
(87) Internationale Veröffentlichungsnummer: WO 2012/104188

(56) Entgegenhaltungen:
- DE-A1-102009 001 962
- US-A- 3 199 016
- US-A1- 2010 007 306
- "IEC 61851-1:2010 - Electric vehicle conductive charging system - Part 1: General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718,

## Beschreibung

Die Erfindung betrifft ein Verfahren zum Schutz eines Ladekabels bei einer Ladeeinrichtung zum Laden einer Fahrbatterie eines elektrisch antreibbaren Fahrzeugs und eine derartige Ladeeinrichtung.

Elektrisch antreibbare Fahrzeuge weisen eine Fahrbatterie (Akkumulator) auf, welche die für den Fahrbetrieb benötigte elektrische Energie zur Verfügung stellt. Entladene Batterien müssen bei Bedarf mittels einer Ladeeinrichtung nachgeladen werden. Dazu werden die Fahrbatterie des elektrisch antreibbaren Fahrzeugs und die Ladeeinrichtung mittels eines Ladekabels elektrisch verbunden. Entsprechend der Stromtragfähigkeit (Stromleitfähigkeit) des Ladekabels weist dieses unterschiedliche Leitungsquerschnitte auf. Beispielsweise gibt es Ladekabel, welche eine Stromtragfähigkeit von 13 A aufweisen. Andere Ladekabel weisen Stromtragfähigkeiten von zum Beispiel 20 A, 32 A oder 63 A auf. Gemäß der Norm IEC 62196-2 werden derartige Ladekabel mit elektrischen Steckern versehen, welche z.B. als sogenannte Typ-2-Stecker ausgestaltet sind. Laut dieser Norm IEC 62196-2 weisen diese Stecker auch dann gleiche geometrische Abmessungen auf, wenn sie für Ladekabel mit unterschiedlich großen Stromtragfähigkeiten vorgesehen sind. Daher kann an den geometrischen Abmessungen des Steckers nicht erkannt werden, für welche Stromtragfähigkeit das mit dem Stecker verbundene Ladekabel geeignet ist.

Nach der Norm IEC 61851-1 ist bei diesen Steckern mittels eines Widerstands, der zwischen die Kontakte "Proximity" und "PE" des Steckers geschaltet ist, die Stromtragfähigkeit des Ladekabels angegeben (codiert). Dabei ist ein bestimmter Widerstandswert einer bestimmten Stromtragfähigkeit des Ladekabels zugeordnet.

Aus dem Dokument US 2010/007306 A1 ist ein Verfahren zum Schutz eines Ladekabels bei einer Ladeeinrichtung zum Laden einer Fahrbatterie eines elektrisch antreibbaren Fahrzeugs bekannt, bei dem ein sogenanntes "control pilot circuit" eingesetzt wird. Das "control pilot circuit" erzeugt ein pulsweitenmoduliertes Pilotsignal, das die Stromkapazität des Ladekabels angibt. Das Pilotsignal wird an eine Steuereinrichtung geleitet, die anhand des Tastverhältnisses die Größe des Nennstroms des Ladekabels erkennt.

Aus dem Dokument "IEC 61851-1:2010 - Electric vehicle conductive charging system - Part 1 : General requirements", INTERNATIONAL STANDARD - IEC NORME INTERNATIONALE - CEI, X, XX, Bd. ed2.0, Nr. IEC 61851-1:2010, 25. November 2010 (2010-11-25), Seiten 1-104, XP008147718 ist allgemein ein Ladesystem für Elektrofahrzeuge bekannt.

Aus dem Dokument US 3 199 016 A ist eine Konstantstromquelle zum Lichtbogenschweißen bekannt, die Maßnahmen aufweist zum Kontrollieren und Beeinflussen einer anfänglichen Stromdichte.

Der Erfindung liegt die Aufgabe zugrunde, ein Verfahren zum Schutz eines Ladekabels bei einer Ladeeinrichtung zum Laden einer Fahrbatterie eines elektrisch antreibbaren Fahrzeugs anzugeben, welches möglichst einfach und preiswert realisierbar ist.

Diese Aufgabe wird erfindungsgemäß gelöst durch ein Verfahren und eine Ladeeinrichtung nach den unabhängigen Patentansprüchen. Vorteilhafte Ausgestaltungen des Verfahrens und der Ladeeinrichtung sind in den jeweiligen abhängigen Patentansprüchen angegeben.

Erfindungsgemäß angegeben wird ein Verfahren zum Schutz eines Ladekabels bei einer Ladeeinrichtung zum Laden einer Fahrbatterie eines elektrisch antreibbaren Fahrzeugs, wobei bei dem Verfahren ein Widerstandswert ermittelt wird, der der Größe des elektrischen Widerstands zwischen zwei Kontakten des Ladekabels entspricht, und in Abhängigkeit von dem ermittelten Widerstandswert eines von mehreren bei der Ladeeinrichtung angeordneten Leitungsschutzgeräten, die jeweils einen Überstromschutz und einen Kurzschlussschutz realisieren, in den Ladestrompfad geschaltet wird. Bei diesem Verfahren ist bei dem Ladekabel lediglich ein einziger Widerstand notwendig, um die Stromtragfähigkeit des Ladekabels anzugeben. Beispielsweise mittels eines einfachen Umschalters wird dann in Abhängigkeit von dem Widerstandswert das entsprechende Leitungsschutzgerät in den Ladestrompfad geschaltet. Dieses Verfahren lässt sich einfach und preiswert realisieren, da Widerstände, Schalter sowie einen Überstromschutz und einen Kurzschlussschutz realisierende Leitungsschutzgeräte, z.B. in Form von Sicherungen, als preiswerte Bauteile am Markt verfügbar sind.

Bei diesem Verfahren ist besonders vorteilhaft, dass der Widerstandswert ermittelt wird und in Abhängigkeit von diesem ermittelten Widerstandswert automatisch ein Leitungsschutzgerät in den Ladestrompfad geschaltet wird. Dieses Leitungsschutzgerät weist z.B. eine Nennstromstärke auf, welche der dem Widerstandswert entsprechenden Stromtragfähigkeit des Ladekabels entspricht. Dadurch wird automatisch das zur Stromtragfähigkeit des Ladekabels passende Leitungsschutzgerät in den Ladestrompfad geschaltet, so dass das Ladekabel mittels des passenden Leitungsschutzgerätes geschützt wird. Dabei ist besonders vorteilhaft, dass bei der Ladeeinrichtung Standard-Leitungsschutzgeräte für die jeweils benötigten Nennstromstärken eingesetzt werden können. Beispielsweise können Sicherungen für 13 A, 20 A, 32 A und 63 A eingesetzt werden. Solche für nur jeweils eine Nennstromstärke ausgelegten Leitungsschutzgeräte sind sehr preisgünstig verfügbar.

Das Verfahren kann so ausgestaltet sein, dass der Ladestrom erst dann über den Ladestrompfad geleitet wird, nachdem das Leitungsschutzgerät in den Ladestrompfad geschaltet ist. Dadurch ist sichergestellt, dass das Ladekabel erst dann mit dem Ladestrom belastet wird, wenn das Ladekabel durch das Leitungsschutzgerät geschützt ist.

Das Verfahren kann auch so ausgestaltet sein, dass ein Widerstandswert ermittelt wird, der der Größe des elektrischen Widerstands zwischen zwei Kontakten eines Steckers des Ladekabels entspricht. Dabei wird beispielsweise ein Widerstandswert ermittelt, der der Größe des elektrischen Widerstands zwischen den Kontakten "Proximity" und "PE" eines gemäß der Norm IEC 62196 aufgebauten Steckers des Ladekabels entspricht.

Das Verfahren kann auch so ablaufen, dass der Ladestrom zusätzlich über einen Fehlerstromschutzschalter geleitet wird (unabhängig davon, welches der Leitungsschutzgeräte in den Ladestrompfad geschaltet ist). Mittels dieses Fehlerstromschutzschalters können Fehlerströme und beispielsweise eine damit verbundene Gesundheitsgefährdung für das Ladekabel berührende Menschen wirkungsvoll verhindert werden.

Erfindungsgemäß angegeben wird weiterhin eine Ladeeinrichtung zum Laden einer Fahrbatterie eines elektrisch antreibbaren Fahrzeugs, welche aufweist:
- eine Schnittstelle zum elektrischen Verbinden mit einem Ladekabel zum Laden der Fahrbatterie,
- eine Messeinrichtung zum Ermitteln eines Widerstandswerts, der der Größe des elektrischen Widerstands zwischen zwei Kontakten des Ladekabels entspricht, wobei die Größe des elektrischen Widerstands die Stromtragfähigkeit des Ladekabels angibt,
- mindestens zwei Leitungsschutzgeräte, die für verschieden große Nenn-Stromstärken ausgelegt sind (wobei jedes der Leitungsschutzgeräte einem bestimmten Widerstandswert zugeordnet ist),
- eine Schalteinrichtung, die eingerichtet ist, jeweils eines der Leitungsschutzgeräte in den Ladestrompfad zu schalten, und
- eine Schalt-Ansteuereinrichtung, die die Schalteinrichtung so ansteuert, dass die Schalteinrichtung in Abhängigkeit von dem ermittelten Widerstandswert jeweils eines der Leitungsschutzgeräte in den Ladestrompfad schaltet. Diese Ladeeinrichtung ist zum Durchführen des oben beschriebenen Verfahrens eingerichtet.

Diese Ladeeinrichtung kann eine Steuereinrichtung aufweisen, die den Ladestrom erst dann über den Ladestrompfad leitet, nachdem das Leitungsschutzgerät in den Ladestrompfad geschaltet ist.

Weiterhin kann die Ladeeinrichtung so ausgestaltet sein, dass die Messeinrichtung eingerichtet ist zum Ermitteln eines Widerstandswerts, der der Größe des elektrischen Widerstands zwischen zwei Kontakten eines Steckers des Ladekabels entspricht. Insbesondere kann die Messeinrichtung eingerichtet sein zum Ermitteln eines Widerstandswerts, der der Größe des elektrischen Widerstands zwischen den Kontakten "Proximity" und "PE" eines gemäß der Norm IEC 62196 aufgebauten Steckers des Ladekabels entspricht.

Die Ladeeinrichtung kann so realisiert sein, dass diese einen in den Ladestromkreis geschalteten Fehlerstromschutzschalter aufweist.

Diese Ladeeinrichtung weist ebenfalls die Vorteile auf, die oben im Zusammenhang mit dem erfindungsgemäßen Verfahren angegeben sind.

Im Folgenden wird die Erfindung anhand eines Ausführungsbeispiels näher erläutert. Dazu ist in
- Figur 1: ein Ausführungsbeispiel einer Ladeeinrichtung und in
- Figur 2: ein Ausführungsbeispiel des Verfahrens zum Schutz des Ladekabels dargestellt.

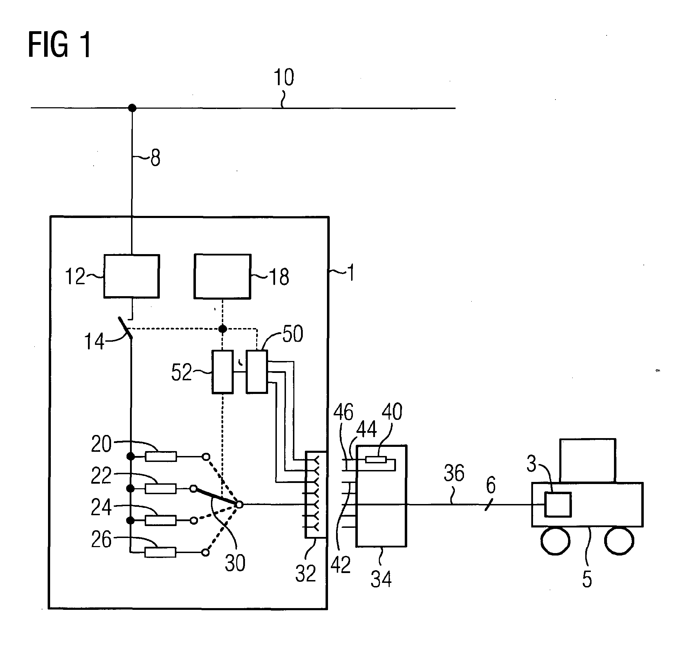

In Figur 1 ist eine Ladeeinrichtung 1 zum Laden einer Fahrbatterie 3 eines elektrisch antreibbaren Fahrzeugs 5 dargestellt. Diese Ladeeinrichtung 1 ist mittels eines Anschlusskabels 8 mit einem Energieversorgungsnetz 10 verbunden. Elektrischer Strom wird von dem Energieversorgungsnetz 10 über das Anschlusskabel 8 und einen Fehlerstromschutzschalter 12 zu einem Schalter 14 der Ladeeinrichtung 1 geleitet. Der Fehlerstromschutzschalter 12 kann z.B. für eine Stromstärke von 80 A ausgelegt sein. Der Schalter 14 wird von einer Steuereinheit 18 angesteuert und kann von dieser Steuereinheit 18 geöffnet bzw. geschlossen werden. Nach dem Schalter 14 verzweigt der Stromkreis zu mehreren parallel geschalteten Leitungsschutzgeräten der Ladeeinrichtung: im Ausführungsbeispiel sind ein erstes Leitungsschutzgerät 20 mit einer Nennstromstärke von 13 A, ein zweites Leitungsschutzgerät 22 mit einer Nennstromstärke von 20 A, ein drittes Leitungsschutzgerät 24 mit einer Nennstromstärke von 32 A und ein viertes Leitungsschutzgerät 26 mit einer Nennstromstärke von 63 A in der Ladeeinrichtung parallel geschaltet. Die vier Leitungsschutzgeräte 20, 22, 24 und 26 realisieren jeweils einen Überstromschutz und einen Kurzschlussschutz. Sie können beispielsweise als Sicherungen für die Stromstärken 13 A, 20 A, 32 A und 63 A ausgestaltet sein. Die Eingänge dieser Leitungsschutzgeräte 20, 22, 24 und 26 sind mit dem Schalter 14 verbunden, die Ausgänge der Leitungsschutzgeräte 20, 22, 24 und 26 sind mit einer Schalteinrichtung 30 verbunden.

Die Schalteinrichtung 30 ist so eingerichtet, dass jeweils nur eines der vier Leitungsschutzgeräte 20, 22, 24 und 26 in den Ladestrompfad geschaltet werden kann. Je nach Schaltstellung der Schalteinrichtung 30 wird der Ausgang eines der Leitungsschutzgeräte 20, 22, 24 oder 26 elektrisch mit einer Schnittstelle 32 (Steckdose, Buchse) verbunden, welche an der Ladeeinrichtung 1 angeordnet ist. Diese Schnittstelle 32 ist im Ausführungsbeispiel so ausgestaltet, dass diese zu einem Stecker 34 eines Ladekabels 36 kompatibel ist. Dieses Ladekabel 36 verbindet die Ladeeinrichtung 1 mit der Fahrbatterie 3 des elektrisch antreibbaren Fahrzeugs 5.

Der Stecker 34 ist im Ausführungsbeispiel als ein sogenannter Typ-2-Stecker ausgestaltet, der entsprechend der Norm IEC 62196-2aufgebaut ist. Dieser Stecker weist sieben elektrische Kontakte auf: vier Kontakte für die Übertragung von Dreiphasenwechselstrom, einen Kontakt "Pilot" 42, einen Kontakt "Proximity" 44 und einen Kontakt "PE" 46 (Norm IEC 61851-1). Zwischen den Kontakten "Proximity" und "PE" ist im Inneren des Steckers 34 ein Widerstand 40 eingebaut. Mittels dieses Widerstands-Bauelements 40 ist gemäß der Norm IEC 61851-1 der Nennstrom des Ladekabels 36 codiert. Dabei gilt folgende Zuordnung:

| Nennstrom Ladekabel | Widerstandswert |
|---|---|
| 13 A | 1,5 kΩ |
| 20 A | 680 Ω |
| 32 A | 220 Ω |
| 63 A | 100 Ω |

Das Ladekabel 36 umfasst nur 6 Leitungen/Adern, da dieses keine Leitung für den Kontakt "Proximity" aufweist.

Wenn der Stecker 34 in die Schnittstelle 32 eingesteckt wird, dann werden unter anderem der Kontakt "Proximity" 44 und der Kontakt "PE" 46 des Steckers 34 mit den zugehörigen Kontakten der Schnittstelle 32 elektrisch verbunden. Diese Kontakte der Schnittstelle 32 sind innerhalb der Ladeeinrichtung 1 elektrisch mit einer Messeinrichtung 50 verbunden. (Zusätzlich ist auch der Kontakt "Pilot" 42 mit der Messeinrichtung 50 und damit auch mit der Steuereinheit 18 verbunden; über den Kontakt "Pilot" kann eine Kommunikation zwischen der Ladeeinrichtung 1 und dem Fahrzeug 5 durchgeführt werden.) Die Messeinrichtung 50 misst bei eingestecktem Stecker 34 den elektrischen Widerstand zwischen den Kontakten "Proximity" und "PE" des Steckers 34 und ermittelt also den jeweiligen Widerstandswert zwischen diesen beiden Kontakten. Dieser Widerstandswert wird zu einer Schalt-Ansteuereinrichtung 52 weitergeleitet, welche in Abhängigkeit von dem ermittelten Widerstandswert die Schalteinrichtung 30 ansteuert und ein Umschalten der Schalteinrichtung 30 veranlasst. Diese Umschaltung wird so vorgenommen, dass die Nennstromstärke desjenigen Leitungsschutzgeräts, welches in den Ladestromkreis geschaltet wird, stets der Stromtragfähigkeit des aktuell verwendeten Ladekabels 36 entspricht. Mit anderen Worten ist jedes der Leitungsschutzgeräte einem bestimmten Widerstandswert zugeordnet. In Abhängigkeit von dem ermittelten Widerstandswert wird mittels der Schalteinrichtung 30 das Leitungsschutzgerät in den Ladestrompfad geschaltet, welches dem ermittelten Widerstandswert zugeordnet ist.

Die Schaltansteuereinrichtung 52 kann als eine spezielle Hardwareschaltung oder auch als eine speicherprogrammierbare Steuerung (SPS) ausgestaltet sein. Wenn die Schaltansteuereinrichtung 52 als Hardwareschaltung ausgestaltet ist, dann können Softwarefehler ausgeschlossen werden, so dass vorteilhafterweise eine besonders sichere und zuverlässige Funktion erreicht werden kann. Dadurch können Fehlschaltungen vermieden werden, so dass Sicherheitsklassen (SIL-Klassen) erfüllt werden können. Die Messeinrichtung kann ebenfalls als eine Hardwareschaltung aufgebaut sein.

Nachdem das entsprechende Leitungsschutzgerät (im Ausführungsbeispiel ist dies das Leitungsschutzgerät 22) in den Ladestrompfad geschaltet worden ist (und ggf. zusätzlich über den "Pilot"-Kontakt eine Kommunikation zwischen der Ladeeinrichtung 1 und dem Fahrzeug 5 durchgeführt wurde), schließt die Steuereinheit 18 den Schalter 14, so dass der Ladestrom erst jetzt über den Ladestrompfad fließen kann. Dadurch wird der Ladevorgang freigegeben bzw. gestartet. Im Ausführungsbeispiel fließt der Ladestrom vom Energieversorgungsnetz 10 über das Anschlusskabel 8, den Fehlerstromschutzschalter 12, den Schalter 14, das zweite Leitungsschutzgerät 22, die Schalteinrichtung (Umschalter) 30, die Schnittstelle 32, den Stecker 34 und das Ladekabel 36 zu der Fahrbatterie 3 des elektrisch angetriebenen Fahrzeuges 5. Dieser Strompfad bildet den aktuellen Ladestrompfad beim Aufladen der Fahrbatterie 3. (Weitere fahrzeuginterne Einrichtungen wie beispielsweise Umrichter sind aus Gründen der Übersichtlichkeit in der Figur 1 nicht dargestellt. Ebenfalls nicht dargestellt ist z.B. eine elektrische Schnittstelle des Fahrzeugs 5, die mit einem ebenfalls nicht dargestellten weiteren elektrischen Stecker des Ladekabels 36 elektrisch verbunden ist.)

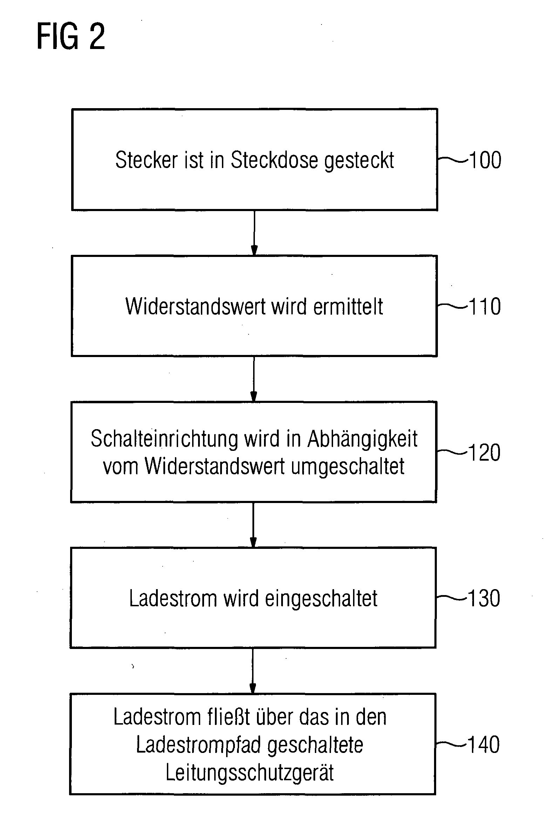

In Figur 2 ist in Form eines Ablaufplanes ein Ausführungsbeispiel des erfindungsgemäßen Verfahrens dargestellt. Ausgangspunkt des Verfahrens ist der Zustand 100, bei dem der Stecker 34 in die Schnittstelle/Steckdose 32 der Ladeeinrichtung 1 gesteckt ist. Danach wird in einem Verfahrensschritt 110 der Widerstandswert zwischen den Kontakten "Proximity" 44 und "PE" 46 des Steckers 34 ermittelt. Es wird also die Größe des elektrischen Widerstands zwischen den Kontakten "Proximity" 44 und "PE" 46 des Steckers 34 ermittelt, hier also die Größe des Widerstandes 40.

Dann wird in einem Verfahrensschritt 120 in Abhängigkeit von dem ermittelten Widerstandswert die Schalteinrichtung 30 derart umgeschaltet, dass das dem ermittelten Widerstandswert zugeordnete Leitungsschutzgerät in den Ladestromkreis geschaltet wird.

Danach wird in einem Verfahrensschritt 130 der Ladestrom eingeschaltet. Schließlich fließt in einem Verfahrensschritt 140 der Ladestrom über das in den Ladestrompfad geschaltete Leitungsschutzgerät.

Es wurde ein Verfahren und eine Ladeeinrichtung beschrieben, bei denen automatisch der Leitungsschutz an das jeweils verwendete Ladekabel angepasst wird. Dadurch ist sichergestellt, dass zu jedem an die Ladeeinrichtung angeschlossenen Ladekabel automatisch ein passendes Leitungsschutzgerät in den Ladestrompfad geschaltet wird.

## Patentansprüche

1. Verfahren zum Schutz eines Ladekabels (36) bei einer Ladeeinrichtung (1) zum Laden einer Fahrbatterie (3) eines elektrisch antreibbaren Fahrzeugs (5),
**dadurch gekennzeichnet, dass**
- ein Widerstandswert ermittelt wird (110), der der Größe des elektrischen Widerstands (40) zwischen zwei Kontakten (44,46) des Ladekabels (36) entspricht, wobei die Größe des elektrischen Widerstands die Stromtragfähigkeit des Ladekabels (36) angibt, und
- in Abhängigkeit von dem ermittelten Widerstandswert eines von mehreren bei der Ladeeinrichtung angeordneten Leitungsschutzgeräten (20,22,24,26), die jeweils einen Überstromschutz und einen Kurzschlussschutz realisieren, in den Ladestrompfad geschaltet wird.

2. Verfahren nach Anspruch 1,
**dadurch gekennzeichnet, dass**
- der Ladestrom erst dann über den Ladestrompfad geleitet wird, nachdem das Leitungsschutzgerät (22) in den Ladestrompfad geschaltet ist.

3. Verfahren nach Anspruch 1 oder 2,
**dadurch gekennzeichnet, dass**
- ein Widerstandswert ermittelt wird, der der Größe des elektrischen Widerstands (40) zwischen zwei Kontakten (44,46) eines Steckers (34) des Ladekabels (36) entspricht.

4. Verfahren nach einem der vorhergehenden Ansprüche,
**dadurch gekennzeichnet, dass**
- der Ladestrom zusätzlich über einen Fehlerstromschutzschalter (12) geleitet wird.

5. Ladeeinrichtung (1) zum Laden einer Fahrbatterie (3) eines elektrisch antreibbaren Fahrzeugs (5), welche aufweist:
- eine Schnittstelle (32) zum elektrischen Verbinden mit einem Ladekabel (36) zum Laden der Fahrbatterie (3), **gekennzeichnet durch**
- eine Messeinrichtung (50) zum Ermitteln eines Widerstandswerts, der der Größe des elektrischen Widerstands (40) zwischen zwei Kontakten (44,46) des Ladekabels (36) entspricht, wobei die Größe des elektrischen Widerstands die Stromtragfähigkeit des Ladekabels (36) angibt,
- mindestens zwei Leitungsschutzgeräte (20,22,24,26), die für verschieden große Nenn-Stromstärken ausgelegt sind und die jeweils einen Überstromschutz und einen Kurzschlussschutz realisieren,
- eine Schalteinrichtung (30), die eingerichtet ist, jeweils eines der Leitungsschutzgeräte (20,22,24,26) in den Ladestrompfad zu schalten, und
- eine Schalt-Ansteuereinrichtung (52), die die Schalteinrichtung (30) so ansteuert, dass die Schalteinrichtung (30) in Abhängigkeit von dem ermittelten Widerstandswert jeweils eines (22) der Leitungsschutzgeräte (20,22,24,26) in den Ladestrompfad schaltet.

6. Ladeeinrichtung nach Anspruch 5,
**gekennzeichnet durch**
- eine Steuereinrichtung (18), die den Ladestrom erst dann über den Ladestrompfad leitet, nachdem das Leitungsschutzgerät (22) in den Ladestrompfad geschaltet ist.

7. Ladeeinrichtung nach Anspruch 5 oder 6,
**dadurch gekennzeichnet, dass**
- die Messeinrichtung (50) eingerichtet ist zum Ermitteln eines Widerstandswerts, der der Größe des elektrischen Widerstands zwischen zwei Kontakten (44,46) eines Steckers (34) des Ladekabels (36) entspricht.

8. Ladeeinrichtung nach einem der Ansprüche 5 bis 7,
**gekennzeichnet durch**
- einen in den Ladestrompfad geschalteten Fehlerstromschutzschalter (12).

## Claims

1. Method for protecting a charging cable (36) in a charging device (1) for charging a traction battery (3) of an electrically drivable vehicle (5),
**characterized in that**
- a resistance value is determined (110), which corresponds to the magnitude of the electrical resistance (40) between two contacts (44, 46) of the charging cable (36), wherein the magnitude of the electrical resistance indicates the current-carrying capacity of the charging cable (36), and
- one of a plurality of line protection devices (20, 22, 24, 26), which are arranged in the charging device and each implement overcurrent protection and short circuit protection, are switched into the charging current path depending on the determined resistance value.

2. Method according to Claim 1,
**characterized in that**
- the charging current is conducted via the charging current path only once the line protection device (22) has been switched into the charging current path.

3. Method according to Claim 1 or 2,
**characterized in that**
- a resistance value is determined which corresponds to the magnitude of the electrical resistance (40) between two contacts (44, 46) of a plug (34) of the charging cable (36).

4. Method according to one of the preceding claims,
**characterized in that**
- the charging current is additionally conducted via a residual current circuit breaker (12).

5. Charging device (1) for charging a traction battery (3) of an electrically drivable vehicle (5), which charging device has:
- an interface (32) for electrical connection to a charging cable (36) for charging the traction battery (3), **characterized by**
- a measuring device (50) for determining a resistance value, which corresponds to the magnitude of the electrical resistance (40) between two contacts (44, 46) of the charging cable (36), wherein the magnitude of the electrical resistance indicates the current-carrying capacity of the charging cable (36),
- at least two line protection devices (20, 22, 24, 26), which are designed for rated current intensities with different magnitudes and which each realize overcurrent protection and short circuit protection,
- a switching device (30), which is designed to switch in each case one of the line protection devices (20, 22, 24, 26) into the charging current path, and
- a switching actuation device (52), which actuates the switching device (30) in such a way that the switching device (30) switches in each case one (22) of the line protection devices (20, 22, 24, 26) into the charging current path depending on the determined resistance value.

6. Charging device according to Claim 5,
**characterized by**
- a control device (18), which conducts the charging current via the charging current path only once the line protection device (22) has been switched into the charging current path.

7. Charging device according to Claim 5 or 6,
**characterized in that**
- the measuring device (50) is designed for determining a resistance value which corresponds to the magnitude of the electrical resistance between two contacts (44, 46) of a plug (34) of a charging cable (36).

8. Charging device according to one of Claims 5 to 7,
**characterized by**
- a residual current circuit breaker (12) switched into the charging current path.

## Revendications

1. Procédé de protection d'un câble de charge (36) sur un dispositif de charge (1) destiné à charger une batterie de traction (3) d'un véhicule entraîné électriquement (5),
**caractérisé en ce que**
- on détermine une valeur de résistance (110), qui correspond à la valeur de la résistance électrique (40) entre deux contacts (44, 46) du câble de charge (36), la valeur de la résistance électrique indiquant la capacité de conduction de courant du câble de charge (36), et
- en fonction de la valeur de résistance déterminée, on branche dans le trajet de courant de charge, un d'une pluralité d'appareils de protection de ligne (20, 22, 24, 26) prévus sur le dispositif de charge, qui réalisent chacun une protection contre les surintensités de courant et une protection contre les courts-circuits.

2. Procédé selon la revendication 1,
**caractérisé en ce que**
- on conduit le courant de charge sur le trajet de courant de charge seulement après que l'appareil de protection de ligne (22) ait été branché dans le trajet de courant de charge.

3. Procédé selon la revendication 1 ou 2,
**caractérisé en ce que**
- on détermine une valeur de résistance qui correspond à la valeur de la résistance électrique (40) entre deux contacts (44, 46) d'un connecteur (34) du câble de charge (36).

4. Procédé selon l'une des revendications précédentes,
**caractérisé en ce que**
- on conduit le courant de charge en outre sur un disjoncteur à courant de défaut (12).

5. Dispositif de charge (1) destiné à charger une batterie de traction (3) d'un véhicule entraîné électriquement (5), lequel dispositif comporte :
- une interface (32) servant au raccordement électrique à un câble de charge (36) pour charger la batterie de traction (3), **caractérisé par**
- un dispositif de mesure (50) servant à déterminer une valeur de résistance qui correspond à la valeur de la résistance électrique (40) entre deux contacts (44, 46) du câble de charge (36), la valeur de la résistance électrique indiquant la capacité de conduction de courant du câble de charge (36), et
- au moins deux d'appareils de protection de ligne (20, 22, 24, 26), qui sont conçus pour différentes intensités de courant nominales et qui réalisent chacun une protection contre les surintensités de courant et une protection contre les courts-circuits,
- un dispositif commutation (30), qui est configuré pour brancher à chaque fois un des appareils de protection de ligne (20, 22, 24, 26) dans le trajet de courant de charge, et
- un dispositif de commande de commutation (52), qui commande le dispositif de commutation (30) de façon à ce que le dispositif de commutation (30) branche à chaque fois un (22) des appareils de protection de ligne (20, 22, 24, 26) dans le trajet de courant de charge en fonction de la valeur de résistance déterminée.

6. Dispositif de charge selon la revendication 5,
**caractérisé par**
- un dispositif de commande (18), qui conduit le courant de charge sur le trajet de courant de charge seulement après que l'appareil de protection de ligne (22) ait été branché dans ledit trajet.

7. Dispositif de charge selon la revendication 5 ou 6,
**caractérisé en ce que**
- le dispositif de mesure (50) est configuré pour déterminer une valeur de résistance qui correspond à la valeur de la résistance électrique entre deux contacts (44, 46) d'un connecteur (34) du câble de charge (36).

8. Dispositif de charge selon l'une des revendications 5 à 7,
**caractérisé par**
- un disjoncteur à courant de défaut (12) branché dans le trajet de courant de charge.
